# EUROPÄISCHE PATENTSCHRIFT

(11) **EP 0 909 307 B1**
(45) Veröffentlichungstag und Bekanntmachung des Hinweises auf die Patenterteilung: **19.07.2000**
(21) Anmeldenummer: 97925010.7
(22) Anmeldetag: 28.05.1997
(51) Int. Cl.: C10L 1/22, C10L 1/14

(54) **PARAFFINDISPERGATOREN FÜR ERDÖLMITTELDESTILLATE**
PARAFFIN DISPERSANTS FOR CRUDE OIL MIDDLE DISTILLATES
DISPERSANTS PARAFFINIQUES POUR DISTILLATS MOYENS DE PETROLE

(30) Priorität: 31.05.1996 DE 19622052
(43) Veröffentlichungstag der Anmeldung: 21.04.1999
(73) Patentinhaber: BASF AKTIENGESELLSCHAFT, 67056 Ludwigshafen (DE)
(72) Erfinder: WENDEROTH, Bernd, D-68623 Lampertheim (DE); UZELAC, Ljiljana, D-67069 Ludwigshafen (DE); FAUL, Dieter, D-67150 Niederkirchen (DE); DRALLE-VOSS, Gabriele, D-64665 Alsbach-Hähnlein (DE)
(74) Vertreter: Isenbruck, Günter, Dr.
(86) Internationale Anmeldenummer: EP9702781
(87) Internationale Veröffentlichungsnummer: WO9746640

(56) Entgegenhaltungen:
- EP-A- 0 398 101
- DE-A- 4 237 662
- DE-A- 4 430 294
- US-A- 4 416 668

## Beschreibung

Die Erfindung betrifft eine Mischung, enthaltend
(a) 10 bis 90 Gew.-% mindestens eines Imides aus einem Copolymerisat auf der Basis eines α-Olefins und einer ethylenisch ungesättigten Dicarbonsäure und einem Polyamin und
(b) 10 bis 90 Gew.-% mindestens eines Umsetzungsproduktes einer mindestens eine tertiäre Aminogruppe aufweisenden Poly(C₂₋₂₀-carbonsäure) mit sekundären Aminen,
sowie ihre Verwendung als Zusatz für Erdölmitteldestillate.

Erdöldestillate, insbesondere Mitteldestillate, wie Gasöle, Dieselöle oder leichte Heizöle, die durch Destillation aus Erdölen gewonnen werden, weisen je nach Herkunft des Rohöls unterschiedliche Anteile an n-Paraffinen auf, die beim Abkühlen kristallisieren können. Dieser Punkt wird als Trübungspunkt oder Cloud Point (CP) bezeichnet. Bei weiterer Abkühlung bilden die plättchenförmigen n-Paraffinkristalle eine Art Kartenhausstruktur, so daß das Mitteldestillat (MD) stockt, obwohl der überwiegende Teil noch flüssig ist. Dieser Punkt wird als Stockpunkt bezeichnet, der Punkt, an dem das Mitteldestillat gerade noch fließfähig ist, als Pour Point. Durch die ausgefallenen Paraffine im Temperaturbereich zwischen Trübungs- und Stockpunkt wird die Fließfähigkeit, insbesondere von Kraftstoffen, erheblich beeinträchtigt. Die Paraffine verstopfen Filter und verursachen bei Kraftstoffen eine ungleichmäßige oder völlig unterbrochene Kraftstoffversorgung zum Motor. Ähnliche Störungen treten bei leichten Heizölen auf.

Es ist bekannt, daß durch geeignete Zusätze zum Erdöldestillat das Kristallwachstum der Paraffine, insbesondere in Destillat-Kraftstoffen, modifiziert werden kann. Gut wirksame Additive verhindern einerseits, daß Paraffine in Mitteldestillaten derartige kartenhausähnliche Strukturen ausbilden und die Mitteldestillate bei Temperaturen von wenigen °C unterhalb der Temperatur, bei der die ersten Kristalle ausfallen, bereits fest werden. Andererseits bewirken diese Additive die Ausbildung feiner, gut kristallisierter, separater Paraffinkristalle, welche die Filter passieren können, so daß ein störungsfreier Kraftstofftransport sichergestellt ist. Die Wirksamkeit der Fließverbesserer wird nach der europäischen Norm EN 116 indirekt durch die Messung des "Cold Filter Plugging Point" (CFPP) bestimmt.

US 3,048,479 betrifft die Verbesserung der Pour Point-Charakteristiken von Mitteldestillaten und der Fließfähigkeit der Mitteldestillate bei niedrigen Temperaturen. Als Pour Point-Erniedriger wird ein Copolymer aus Ethylen und einem Vinylfettsäureester mit 3 bis 5 Kohlenstoffatomen im Ester beschrieben, das ein Molekulargewicht im Bereich von 1.000 bis 3.000 hat und 15 bis 25 Gew.-% des Vinylesters enthält. Insbesondere wird ein Ethylen/Vinylacetat-Copolymer beschrieben.

US 3,627,838 betrifft ein Verfahren zur Herstellung von Copolymeren aus Ethylen und Vinylacetat zur Verwendung als Pour Point-Erniedriger zur Verbesserung der Qualität von Mitteldestillaten. Das Copolymer enthält 28 bis 60 Gew.-% Vinylacetat und hat ein Molekulargewicht im Bereich von 2000 bis 6000.

DE-A-1 914 756 betrifft ein Verfahren zur Herstellung von Mischpolymerisaten sowie deren Verwendung in Destillatölen. Mit dem Verfahren werden Mischpolymerisate aus Ethylen und Vinylacetat hergestellt, wobei der Anteil an verzweigten Ethylenketten gering gehalten werden kann. Das Molverhältnis von Ethylen zu Vinylacetat beträgt 4,2 bis 6,2. Die Mischpolymerisate werden als Pour Point-Erniedriger und zur Verbesserung der Fließeigenschaften des Destillatöls verwendet.

DE-C-1 147 799 betrifft einen Erdöldestillat-Treib- bzw. -Brennstoff. Der Brenn- bzw. Treibstoff enthält ein Mischpolymerisat aus Ethylen und Vinylacetat mit einem Molekulargewicht zwischen etwa 1000 und 3000. Das Mischpolymerisat dient der Verbesserung der Fließfähigkeit bei tiefen Temperaturen.

EP-A-0 084 148 betrifft Erdölmitteldestillate mit verbesserten Fließeigenschaften. Die Erdölmitteldestillate enthalten 0,005 bis 0,5 Gew.-% eines Ethylen/Vinylpropionat-Copolymerisats mit einem Molekulargewicht von 1000 bis 3000 und einem Vinylpropionatgehalt von 5 bis 29 Gew.-%, bezogen auf das Copolymere. Das Copolymere dient als Fließverbesserer.

Die ausgefallenen Paraffinkristalle neigen aufgrund ihrer gegenüber dem flüssigen Teil höheren Dichte dazu, sich beim Lagern der Erdölmitteldestillatzusammensetzungen mehr und mehr am Boden des Behälters abzusetzen. Dadurch bildet sich im oberen Behälterteil eine homogene paraffinarme und am Boden eine zweiphasige paraffinreichere Schicht. In Fahrzeugtanks, wie auch in Lager- oder Liefertanks von Mineralölhändlern befindet sich der Abzug des Erdölmitteldestillates oft nur wenig oberhalb des Tankbodens. Somit besteht die Gefahr, daß es bei einer hohen Konzentration an festen Paraffinen in diesem Bereich zu Verstopfungen von Filtern und Dosiereinrichtungen kommt.

Durch den zusätzlichen Einsatz von Paraffindispergatoren (Wax Anti Settling Additive) können diese Probleme verringert werden.

EP-A-0 398 101 betrifft Umsetzungsprodukte von Aminoalkylenpolycarbonsäuren mit sekundären Aminen und Erdölmitteldestillatzusammensetzungen, die diese enthalten. Insbesondere werden Nitriloessigsäureamide neben Ethylen/Vinylpropionat-Copolymeren, Ethylen/Vinylacetat-Copolymeren bzw. Ethylen/Ethylhexylacrylat-Copolymeren als Fließverbesserer in Erdölmitteldestillat-zusammensetzungen eingesetzt, um die Kältefließfähigkeit der Erdölmitteldestillatzusammensetzung zu verbessern und die Dispergierung von ausgeschiedenen Paraffinkristallen zu verbessern.

WO 96/06902 betrifft Polymermischungen und ihre Verwendung als Zusatz für Erdölmittelldestilate. Die Polymermischungen enthalten ein Imid aus einem Copolymerisat auf der Basis eines α-Olefins und einer ethylenischen ungesättigten Dicarbonsäure und einem Polyamin sowie ein davon verschiedenes Copolymerisat, das mindestens 2 Monomere aus der Gruppe, bestehend aus Ethylen, Acrylestern, Vinylestern, Vinylethern und ethylenisch ungesättigten Dicarbonsäuren oder Dicarbonsäurederivaten enthält. Vorzugsweise enthält das Copolymerisat mindestens die Monomere Ethylen und Vinylester, insbesondere ist das Copolymerisat ein Ethylen/Vinylpropionat-Copolymer.

Nicht in allen Erdölmitteldestillatzusammensetzungen reicht die Dispergierwirkung der in EP-A-0 398 101 beschriebenen Paraffindispergatoren aus. Bei den in WO 96/06902 beschriebenen Paraffindispergatoren ist die Fließfähigkeit der damit hergestellten Erdölmitteldestillatzusammensetzungen unzureichend.

Eine Aufgabe der vorliegenden Erfindung ist die Bereitstellung eines Paraffindispergators für Erdölmitteldestillatzusammensetzungen, der für eine Vielzahl von Erdölmitteldestillaten wirksam ist.

Eine weitere Aufgabe der vorliegenden Erfindung ist die Bereitstellung von Paraffindispergatoren, die in Verbindung mit Fließverbesserern die Fließeigenschaften von Erdölmitteldestillatzusammensetzungen verbessern.

Eine weitere Aufgabe der vorliegenden Erfindung ist die Bereitstellung von Paraffindispergatoren, die als konzentrierte Lösung eingesetzt werden können.

Diese und weitere Aufgaben werden gelöst von einer Mischung, wie sie vorstehend aufgeführt ist, sowie durch Konzentrate und Erdölmitteldestillatzusammensetzungen, wie sie nachstehend definiert sind.

### KOMPONENTE (a)

Die erfindungsgemäßen Mischungen enthalten 10 bis 90 Gew.-% eines Imides aus einem Copolymerisat auf der basis eines α-Olefins und einer ehtylenisch ungesättigten Dicarbonsäure und einem Polyamin (Komponente (a)), die im folgenden auch Copolymerisat (a) genannt wird.

Die Copolymerisate (a) haben im allgemeinen ein gewichtsmittleres Molekulargewicht von 200 bis 50000, vorzugsweise von 500 bis 20000. Die Copolymerisate (a) enthalten vorzugsweise 30 bis 70 mol-%, besonders bevorzugt 40 bis 60 mol-%, α-Olefin und 30 bis 70 mol-%, besonders bevorzugt 40 bis 60 mol-%, jeweils bezogen auf die Menge (a), Imid aus einer ethylenisch ungesättigten Dicarbonsäure und einem Polyamin. Ganz besonders bevorzugt ist ein alternierendes Copolymerisat mit gleichen molaren Anteilen an Imid und α-Olefin.

Im allgemeinen werden verzweigte oder geradkettige α-Olefine der allgemeinen Formel I 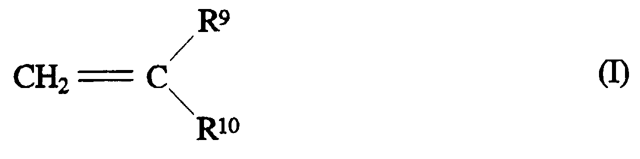 worin R⁹ Wasserstoff oder einen C₁-C₁₀-Alkylrest und R¹⁰ einen Alkyl-, Alkenyl- oder Arylrest bedeutet, eingesetzt. Geeignet sind beispielsweise α-Olefine wie 1-Buten, 1-Hexen, 1-Octen, 1-Decen, 1-Dodecen, 1-Tetradecen, 1-Hexadecen, 1-Octadecen oder Gemische von 1-Alkenen mit 20 bis 24 oder 24 bis 28 C-Atomen oder längerkettige Polyethylenabkömmlinge mit endständiger CC-Doppelbindung. Auch endständig ungesättigte polymere Propen-, Buten- und Isobuten-Derivate sind geeignet. Weiterhin kommen Aryl-substistuierte Olefine wie Styrol in Frage.

Bevorzugt sind α-Olefine mit Kettenlängen von C₁₂ bis C₄₀, insbesondere geradkettige α-Olefine mit Kettenlängen von C₁₂ bis C₂₈ und vor allem solche mit Kettenlängen von C₁₆ bis C₂₄.

Erfindungsgemäß ganz besonders bevorzugt werden C₂₀₋₂₄-α-Olefine verwendet. Hierbei handelt es sich im allgemeinen um Mischungen von α-Olefinen, die zu über 80 Gew.-% aus α-Olefinen mit 20 bis 24 Kohlenstoffatomen bestehen.

Die erfindungsgemäßen Copolymerisate (a) können darüber hinaus noch bis 10 mol-% mindestens eines weiteren ethylenisch ungesättigten Monomeren enthalten. Beispiele für geeignete Monomere sind Acrylsäure, Methacrylsäure, daraus abgeleitete Ester sowie Stearylvinylester, Vinylether und Vinylester.

Als den Copolymerisaten (a) zugrundeliegende ethylenisch ungesättigte Dicarbonsäuren eignen sich beispielsweise monoethylenisch ungesättigte Dicarbonsäuren mit 4 bis 8 C-Atomen, z.B. Maleinsäure, Itaconsäure, Mesaconsäure, Citraconsäure und Methylenmalonsäure. Von den genannten Säuren sind Maleinsäure und Itaconsäure bevorzugt, wobei Maleinsäure ganz besonders bevorzugt ist.

Für die Herstellung der Imide lassen sich naturgemäß neben den Dicarbonsäuren auch die entsprechenden Dicarbonsäureester bzw. Dicarbonsäureanhydride verwenden.

Die erfindungsgemäß hierfür bevorzugten ethylenisch ungesättigten Dicarbonsäuren oder Dicarbonsäurederivate lassen sich in der allgemeinen Formel II zusammenfassen 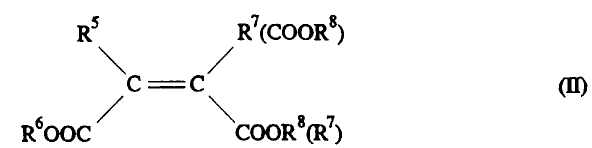 worin R⁵ bis R⁸ unabhängig voneinander Wasserstoff oder einen gegebenenfalls Heteroatome enthaltenden C₁-C₂₂-Alkylrest bedeuten, wobei es sich im Falle von cis-Dicarbonsäuren der Formel II (R⁶=R⁸=H) auch um deren Säureanhydride handeln kann.

In der Regel ist es von Vorteil, die Dicarbonsäurederivate in Form der Anhydride bei der Copolymerisation einzusetzen. Die Anhydridgruppen der zunächst gebildeten Copolymerisate können dann direkt mit den Polyaminen umgesetzt werden.

Beispiele hierfür sind Maleinsäureanydrid, Itaconsäureanhydrid, Citraconsäureanhydrid, Methylenmalonsäureanhydrid.

Polyamine im Sinne der Erfindung sind Amine, die mindestens zwei Stickstoffatome enthalten.

Bevorzugt werden erfindungsgemäß Polyamine der Formel III 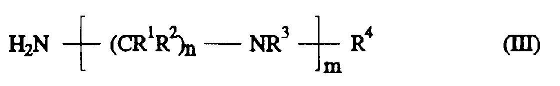
- n: 1 bis 6;
- m: 1 bis 3;
- R¹ und R²: unabhängig voneinander Wasserstoff, Methyl, Ethyl;
- R³: Wasserstoff, C₂₋₂₄-Alkenyl, C₁₋₂₄-Alkyl, C₆₋₁₈-Aryl und
- R⁴: Wasserstoff, C₁₋₂₄-Alkyl, C₂₋₂₄-Alkenyl, C₆₋₁₈-Aryl, aminhaltiges C₂₋₂₄-Alkenyl oder aminhaltiges C₁₋₂₄-Alkyl bedeuten,
verwendet.

Beispiele für erfindungsgemäß geeignete Polyamine der Formel III sind

N-Cyclohexylpropylendiamin-1,3; N-2-Ethylhexylpropylendiamin-1,3; N-Dodecyl-1,3-Propylendiamin; N-Stearylpropylendiamin-1,3; N-Oleylpropylendiamin-1,3; N-3-Aminopropyltalgfettamin; N-Archedylpropylendiamin-1,3; N-Behenylpropylendiamin-1,3; N-Benzyl-propylendiamin-1,3; 2-Aminoethylstearylamin; 2-Aminoethylbehenylamin; 2-Aminoethyloleylamin; 2-Aminoethyltalgfettamin; N-Stearylbishexamethylendiamin-1,6; N-Stearyldipropylentriamin; N-Dodecyldipropylentriamin; N,N-Dimethylaminopropylamin-1,3; N,N-Ditridecylpropylendiamin-1,3; N,N-Bis (2-Ethylhexyl)-3-Aminopropylenamin; Bis-aminopropyltalgfettamin; Bis-aminopropyllaurylamin, 1-(2-Aminopropyl)stearylamin; 1- (2-Aminopropyl)-piperazin; N-2-Aminoethyl-piperidin; N-3-Aminopropylimidazol.

Besonders bevorzugt werden erfindungsgemäß Polyamine der Formel IV,

R⁴―NH―CH₂―CH₂―CH₂―NH₂ (IV)

worin R⁴ wie vorstehend die Bedeutung Alkyl, Alkenyl, Aryl, aminhaltige Alkyl, aminhaltiges Alkenyl oder Wasserstoff hat, verwendet. Von diesen ist N-Talgfett-1,3-diaminopropan besonders geeignet.

N-Talgfett-1,3-diaminopropan ist hierbei insbesondere eine Mischung von Diaminen der Formel IV, die sich im Alkylrest R⁴ unterscheiden. Die Alkylreste weisen näherungsweise eine Verteilung (in Gew.-%) von 1 % C₁₂, 3% C₁₄, 30 % C₁₆, 25 % C₁₈, 40 % C₁₈, (mit einer Doppelbindung) und 1 % C₂₀₋₂₂ auf.

In einer bevorzugten Ausführungsform der Erfindung ist Komponente (a) das Imid, welches sich von einem C₁₂₋₄₀-, vorzugsweise C₁₂₋₂₈-, insbesondere C₂₀-C₂₄-α-Olefin/Maleinsäureanhydrid-Copolymerisat und einem Polyamin ableitet.

Die in den Copolymerisaten (a) enthaltenen sekundären oder tertiären Aminogruppen können auch in quaternierter Form vorliegen, z.B. durch Umsetzung der Imide mit anorganischen oder organischen Säuren oder durch Alkylierung mit bekannten Alkylierungsreagenzien. Mit Alkylierung sei hierbei insbesondere die Einführung einer Alkyl-, Alkenyl- oder Hydroxyalkylgruppe gemeint. Entsprechende Gegenionen sind beispielsweise die Anionen einer organischen oder anorganischen Säure, z.B. CH₃OSO₃-, SO₄²- oder Alk(en)yl- CO₂⊖.

Die Herstellung der Komponente (a) erfolgt im allgemeinen durch Copolymerisation nach dem in WO 96/06902 angegebenen Verfahren.

Das mittlere Molekulargewicht (Gewichtsmittel) der erfindungsgemäßen Copolymerisate (a) beträgt im allgemeinen 200 bis 50000, vorzugsweise 500 bis 20000.

### KOMPONENTE (b)

Komponente (b) ist ein Umsetzungsprodukt einer mindestens eine tertiäre Aminogruppe aufweisenden Poly(C₂-₂₀-carbonsäure) mit sekundären Aminen.

Die Polycarbonsäure enthält dabei mindestens 3 Carboxylgruppen, vorzugsweise 3 bis 12, insbesondere 3 bis 5 Carboxylgruppen. Die Carbonsäuregruppen in der Polycarbonsäure weisen vorzugsweise 2 bis 10 Kohlenstoffatome auf, bevorzugt sind es Essigsäuregruppen.

Gemäß einer Ausführungsform der Erfindung ist Komponente (b) ein Amid, Amidammoniumsalz, Ammoniumsalz oder ein Gemisch davon von Aminoalkylenpolycarbonsäuren der Formeln V und VI 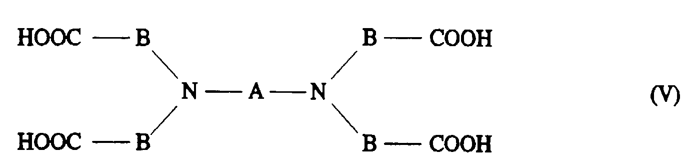 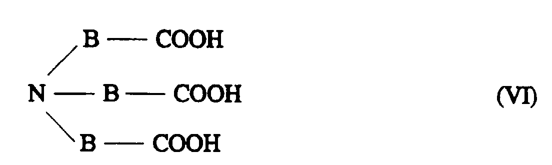 wobei A einen geradkettigen oder verzweigten Alkylenrest mit 2 bis 6 Kohlenstoffatomen oder den Rest der Formel VII 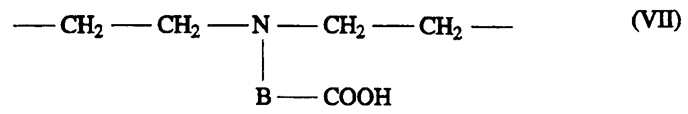 darstellt, wobei B ein 1 bis 19 Kohlenstoffatome aufweisender Rest, vorzugsweise ein C₁₋₁₉-Alkylenrest ist, insbesondere ein Methylenrest ist. Vorzugsweise ist A ein Ethylenrest.

Das sekundäre Amin hat vorzugsweise die Formel HNR₂, wobei die Reste R im wesentlichen geradkettige aliphatische Reste sind, insbesondere Alkylreste mit 10 bis 30, bevorzugt 14 bis 24 C-Atomen.

Die sekundären Amine können mittels Amidstrukturen oder in Form der Ammoniumsalze an die Polycarbonsäure gebunden sein, auch zum Teil mittels Amidstrukturen und zum Teil in Form der Ammoniumsalze.

Vorzugsweise sind sie vollständig in Form der Amidstrukturen gebunden.

Die Amide, bzw. Amid-Ammoniumsalze bzw. Ammoniumsalze beispielsweise der Nitrilotriessigsäure, Diethylendiamintetraessigsäure oder der Propylen-1,2-diamintetraessigsäure werden durch Umsetzung der Säuren mit 0,5 bis 1,5 Mol Amin, bevorzugt 0,8 bis 1,2 Mol Amin pro Carboxylgruppe erhalten.

Die Umsetzungstemperaturen betragen etwa 80 bis 200°C, wobei zur Herstellung der Amide eine kontinuierliche Entfernung des entstandenen Reaktionswassers erfolgt. Die Umsetzung muß jedoch nicht vollständig zum Amid geführt werden, vielmehr können 0 bis 100 mol-% des eingesetzten Amins in Form des Ammoniumsalzes vorliegen. Speziell bevorzugte Amine sind Dioleylamin, Dipalmitinamin, Dikokosfettamin und Dibehenylamin, insbesondere Ditalgfettamin.

Erfindungsgemäß verwendbare Komponenten (b) sind ferner in der EP-A-0 398 101 beschrieben.

Gemäß einer Ausführungsform der Erfindung kann Komponente (b) geringe Mengen an Leitfähigeitsvebesserern in Form von Salzen, insbesondere von kohlenwasserstofflöslichen Carbonsäuren und Sulfonsäuren bzw. deren Metall- und Ammoniumsalzen, enthalten. Die Leitfähigkeitsverbesserer können dazu dienen, die Dispergierfähigkeit der gebildeten festen Paraffine zu erhöhen.

Die erfindungsgemäßen Polymermischungen können durch einfaches Vermischen der Komponenten (a) und (b) hergestellt werden, vorzugsweise in einem Gewichtsverhältnis von 10:1 bis 1:10, insbesondere 3:1 bis 1:3.

Die erfindungsgemäßen Polymermischungen finden Verwendung als Zusatz für Erdölmitteldestillate, worunter Petroleum, leichte Heizöle und Dieselkraftstoffe mit einer Siedetemperatur von etwa 150 bis 400°C verstanden werden. Die Polymermischungen können den Mitteldestillaten direkt, bevorzugt aber als 20 bis 70 Gew.-%ige Lösung (Konzentrat) zugesetzt werden. Geeignete Lösungsmittel sind aliphatische oder aromatische Lösungsmittel wie Xylol oder deren Gemische, weiterhin hochsiedende Aromatengemische wie Solvent Naphtha, sowie Mitteldestillate. Die Menge an Polymermischung in den Erdölmitteldestillaten beträgt in der Regel 10 bis 10000, vorzugsweise 20 bis 5000 und besonders bevorzugt 50 bis 1000 ppm. Je nach Verwendungszweck können die Mitteldestillate noch weitere Additive wie z.B. Dispergatoren, Anti-Schaum-Mittel, Korrosionsschutzmittel, Antioxidantien, Demulgatoren, Schmierfähigkeitsverbesserer, Leitfähigkeitsverbesserer und/oder Farb- und Duftstoffe enthalten.

In der Regel enthalten die Erdölmitteldestillate zudem Fließverbesserer, beispielsweise auf Basis von Ethylen/Vinylcarboxylat-Copolymeren, insbesondere Ethylen/Vinylacetat-Copolymeren, oder Ethylen/Vinylpropionat-Copolymeren.

Die erfindungsgemäßen Polymermischungen bewirken in Mitteldestillaten unabhängig von deren Herkunft eine deutliche Verbesserung der Fließeigenschaften in der Kälte, indem sie ausgeschiedene Paraffinkristalle wirksam in der Schwebe halten, so daß es nicht zu Verstopfungen von Filtern und Leitungen durch abgesetztes Paraffin kommt. Sie weisen eine gute Breitenwirksamkeit auf und bewirken so, daß die ausgeschiedenen Paraffinkristalle in unterschiedlichen Mitteldestillaten sehr gut dispergiert werden.

Die Erfindung wird nachstehend anhand von Beispielen näher erläutert.

### BEISPIELE:

Die Prozentangaben in den Beispielen beziehen sich jeweils auf das Gewicht.

### Beispiel 1 (KOMPONENTE (a))

Das eingesetzte Maleinsäureanhydrid/C₂₀-₂₄-α-Olefin-Copolymer enthielt beide Monomeren in gleichen molaren Mengen und hatte ein gewichtsmittleres Molekulargewicht von 3500.

255 g einer 50%igen Lösung eines Maleinsäureanhydrid/C₂₀₋₂₄-α-Olefin-Copolymeren wurde mit 100,2 g Aminopropyltalgfettamin (Duomeen®T der Akzo) langsam auf 160°C erwärmt. Unter Stickstoffstrom wurde die Lösung einige Stunden bei dieser Temperatur gerührt und dabei das Kondensationswasser abdestilliert. Nach 2 Stunden betrug die Säurezahl des Produktes 5,4 mg KOH/g. Im IR-Spektrum war deutlich die Imidbande bei 1700 cm⁻¹ zu erkennen. Das erhaltene Produkt wurde mit 75 g Solvent Naphtha verdünnt, so daß der Feststoffgehalt des Produktes 50% betrug.

### Beispiel 2 (KOMPONENTE (b))

240 g (0,48 mol) Ditalgfettamin und 35 g (0,12 mol) Ethylendiaminotetraessigsäure wurden aufgeschmolzen und auf 190°C erhitzt, wobei das entstandene Reaktionswasser kontinuierlich abdestillierte. Die Umsetzung wurde nach ca. 25 Stunden bei einer Säurezahl kleiner 10 und einer Aminzahl kleiner 1,1 abgebrochen. Durch Anlegen von Wasserstrahlvakuum (2 Stunden, 120°C) wurde das Reaktionswasser vollständig entfernt. Man erhielt 265 g eines braunen, wachsartigen Feststoffes. Das erhaltene Produkt wurde mit Solvent Naphtha so verdünnt, daß der Feststoffgehalt des Produktes 50 Gew.-% betrug.

### Erdölmitteldestillat-Zusammensetzungen

Die erfindungsgemäßen Mischungen wurden in zwei handelsüblichen deutschen Winter-Dieselkraftstoffen geprüft, die der europäischen Dieselkraftstoff-Norm EN 590 entsprechen. Sie sind nachstehend als DK 1 und DK 2 bezeichnet und weisen die nachstehenden physikalischen Daten auf:

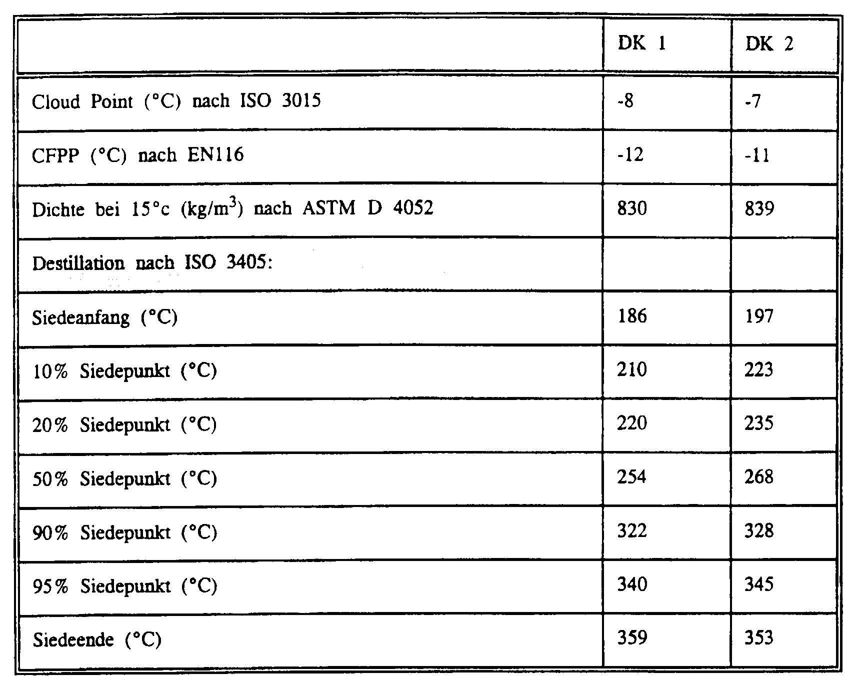

Aus den Komponenten gemäß Beispiel 1 und Beispiel 2 wurden die nachstehenden Mischungen hergestellt:
Mischung PD 1: 50 Gew.-% Beispiel 1, 50 Gew.-% Beispiel 2
Mischung PD 2: 60 Gew.-% Beispiel 1, 40 Gew.-% Beispiel 2
Mischung PD 3: 40 Gew.-% Beispiel 1, 60 Gew.-% Beispiel 2
VGL 1: 100% Beispiel 1
VGL 2: 100% Beispiel 2

VGL 1 und VGL 2 sind Vergleichsbeispiele der jeweiligen Einzelkomponenten.

Zudem wurde ein Fließverbesserer (MDFI) verwendet, der ein Produkt auf Basis von Ethylen/Vinylpropionat ist, welches unter dem Handelsnamen Keroflux® 5486 von der BASF AG vermarktet wird.

Die Erdölmitteldestillate wurden mit den in der nachstehenden Tabelle angegebenen Mengen der erfindungsgemäßen Mischungen PD 1 bis PD 3 bzw. der Vergleichsmischungen VGL 1 und VGL 2 und mit dem Fließverbesserer MDFI bei 40°C unter Rühren vermischt und anschließend auf Raumtemperatur abgekühlt.

Von jedem additivierten Erdölmitteldestillat wurde der "Cold Filter Plugging Point" (CFPP) nach EN 116 bestimmt.

Die Erdölmitteldestillate mit Additiven wurden in 500 ml fassenden Glaszylindern sodann in einem Kältebad von Raumtemperatur auf -13°C abgekühlt und 20 Stunden bei dieser Temperatur gelagert. Anschließend wurde visuell die Menge und das Aussehen der Paraffinsphase bestimmt und beurteilt. Sodann wurden bei -13°C 20 Vol.% Bodenphase von jeder Probe abgetrennt und der "Cold Filter Plugging Point" (CFPP) nach EN 116 und der Cloud Point nach ISO 3015 bestimmt. Je geringer dabei die Abweichung des Cloud Points der 20 Vol.%-Bodenphase vom Original-CP des jeweiligen Mitteldestillates ist, um so besser sind die Paraffine dispergiert.

Die erhaltenen Ergebnisse sind in den nachstehenden Tabellen 1 und 2 aufgeführt:

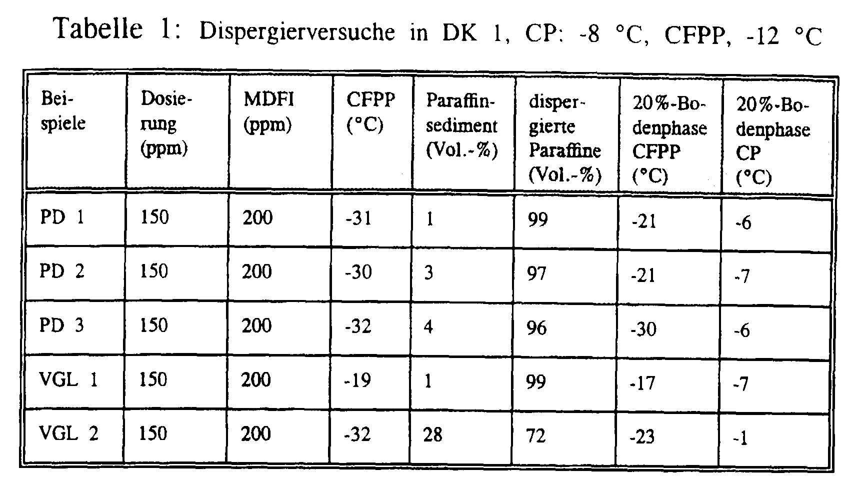

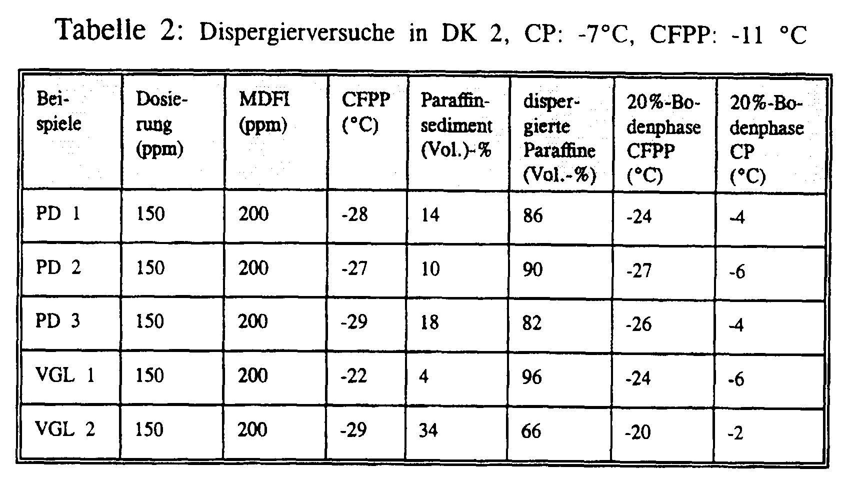

Aus den Versuchsergebnissen geht hervor, daß die die erfindungsgemäßen Mischungen enthaltenen Erdöldestillate einen sehr niedrigen CFPP aufweisen und gleichzeitig eine minimale Menge an Paraffinsediment.

Vergleichsbeispiel VGL 1 führt in DK 1 und DK 2 zu einem schlechten (hohen) CFPP. Für VGL 2 ergeben sich hohe Werte an Paraffinsediment und ein hoher Cloud Point der 20%-Bodenphase.

Dies zeigt, daß durch die erfindungsgemäßen Mischungen der Komponenten (a) und (b) in Erdölmitteldestillaten unabhängig von der Herkunft die Fließeigenschaften in der Kälte deutlich verbessert werden können. Die ausgeschiedenen Paraffinkristalle werden wirksam in der Schwebe gehalten, so daß es nicht zu Verstopfungen von Filtern und Leitungen durch sedimentiertes Paraffin kommen kann. Die erfindungsgemäßen Mischungen weisen eine gute Breitenwirkung auf und bewirken, daß die ausgeschiedenen Paraffinkristalle in unterschiedlichen Mitteldestillaten sehr gut dispergiert werden. Gleichzeitig tragen sie zu einem verbesserten "Cold Filter Plugging Point" (CFPP) bei.

## Patentansprüche

1. Mischung, enthaltend
(a) 10 bis 90 Gew.-% mindestens eines Imides aus einem Copolymerisat auf der Basis eines α-Olefins und einer ethylenisch ungesättigten Dicarbonsäure und einem Polyamin und
(b) 10 bis 90 Gew.-% mindestens eines Umsetzungsproduktes einer mindestens eine tertiäre Aminogruppe aufweisenden Poly(C₂-₂₀-carbonsäure) mit sekundären Aminen.

2. Mischung nach Anspruch 1, wobei das Polyamin ein Amin der Formel III 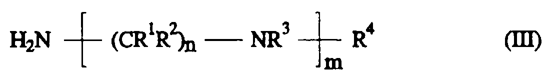 ist, worin
n 1 bis 6;
m 1 bis 3;
R¹ und R² unabhängig voneinander Wasserstoff, Methyl, Ethyl;
R³ Wasserstoff, C₂₋₂₄-Alkenyl, C₁₋₂₄-Alkyl, C₆₋₁₈-Aryl und
R⁴ Wassertoff, C₁₋₂₄-Alkyl, C₂₋₂₄-Alkenyl, C₆₋₁₈-Aryl, aminhaltiges C₂₋₂₄-Alkenyl oder aminhaltiges C₁₋₂₄-Alkyl bedeuten,
und/oder wobei die mindestens eine tertiäre Aminogruppe aufweisende Poly(C₂-₂₀-carbonsäure) die nachstehende Formel V oder VI aufweist 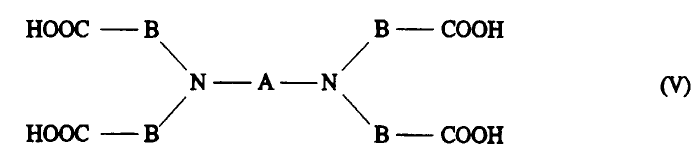 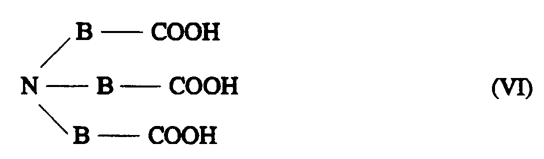 wobei A einen geradkettigen oder verzweigten C₂-₆-Alkylenrest oder den Rest der Formel VII 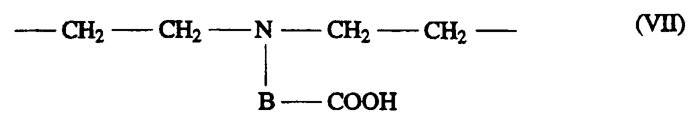 darstellt, worin B ein C₁-₁₉-Alkylenrest, vorzugsweise ein Methylenrest ist.

3. Mischung nach einem der vorstehenden Ansprüche, wobei das Umsetzungsprodukt (b) ein Amid, Amidammoniumsalz oder Ammoniumsalz ist, in dem keine, eine oder mehrere Carbonsäuregruppen in Amidgruppen überführt sind,
und/oder wobei das sekundäre Amin die allgemeine Formel HNR2 aufweist, wobei die Reste R C₁₀-₃₀-Alkylreste sind, die geradkettig oder verzweigt sind.

4. Mischung nach einem der Ansprüche 2 oder 3, wobei das Polyamin ein Amin der Formel IV
R⁴―NH―CH₂―CH₂―CH₂―NH₂ (IV)
ist, wobei R⁴ die Bedeutung C₁₋₂₄-Alkyl, C₂₋₂₄-Alkenyl, C₆₋₁₈-Aryl, aminhaltiges C₁₋₂₄-Alkyl, aminhaltiges C₂₋₂₄-Alkenyl oder Wasserstoff hat.

5. Mischung nach einem der Ansprüche 1 bis 4, wobei das Copolymerisat der Komponente (a) ein α-Olefin/Maleinsäureimid-Copolymer ist, vorzugsweise aus einem C₁₂₋₄₀-α-Olefin,
und/oder wobei A in Komponente (b) ein Ethylenrest ist,
und/oder wobei der Rest R in Komponente (b) ein Talgfettrest ist, insbesondere, wobei sämtliche der vorstehenden Merkmale vorliegen.

6. Verwendung einer Mischung nach einem der Ansprüche 1 bis 5 als Zusatz für Erdölmitteldestillate.

7. Verwendung nach Anspruch 6 als Paraffindispergator für Erdölmitteldestillate.

8. Erdölmitteldestillat, enthaltend eine Mischung nach einem der Ansprüche 1 bis 5.

9. Erdölmitteldestillat nach Anspruch 8, weiterhin enthaltend als Mitteldestillat-Fließverbesserer geeignete Copolymere, insbesondere Ethylen/ Vinylacetat-Copolymere und/oder Ethylen/Vinylpropionat-Copolymere.

10. Konzentrat, enthaltend 10 bis 60 Gew.-%, bezogen auf die Gesamtmenge des Konzentrats, an einer Mischung nach einem der Ansprüche 1 bis 5, gelöst in einem Kohlenwasserstofflösungsmittel.

## Claims

1. A mixture containing
(a) from 10 to 90% by weight of at least one imide of a copolymer based on an α-olefin and an ethylenically unsaturated carboxylic acid and a polyamine and
(b) from 10 to 90% by weight of at least one reaction product of a poly(C₂-C₂₀-carboxylic acid) having at least one tertiary amino group with secondary amines.

2. A mixture as claimed in claim 1, wherein the polyamine is an amine of the formula III 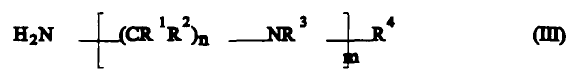 where
n is from 1 to 6,
m is from 1 to 3,
R¹ and R², independently of one another, are each hydrogen, methyl or ethyl,
R³ is hydrogen, C₂-C₂₄-alkenyl, C₁-C₂₄-alkyl or C₆-C₁₈-aryl and
R⁴ is hydrogen, C₁-C₂₄-alkyl, C₂-C₂₄-alkenyl, C₆-C₁₈-aryl, amine-containing C₂-C₂₄-alkenyl or amine-containing C₁-C₂₄-alkyl,
and/or wherein the poly(C₂-C₂₀-carboxylic acid) having at least one tertiary amino group is of the following formulae V or VI 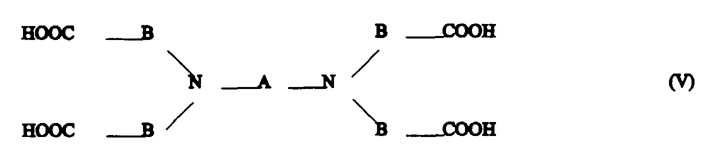 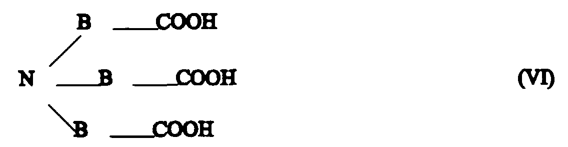 where A is straight-chain or branched alkylene C₂-C₆-alkylene or a radical of the formula VII 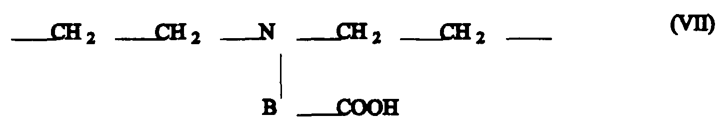 where B is C₁-C₁₉-alkylene, preferably methylene.

3. A mixture as claimed in any of the preceding claims, wherein the reaction product (b) is an amide, amide-ammonium salt or ammonium salt in which no carboxyl group, one carboxyl group or a plurality of carboxyl groups is or are converted into amido groups, or wherein the secondary amine is of the formula HNR₂, where R is straight-chain or branched C₁₀-C₃₀-alkyl.

4. A mixture as claimed in either of claims 2 and 3, wherein the polyamine is an amine of the formula IV
**R**^{**4**}**―NH―CH**_{**2**}**―CH**_{**2**}**―CH**_{**2**}**―NH**_{**2**} (IV)
where R⁴ is C₁-C₂₄-alkyl, C₂-C₂₄-alkenyl, C₆-C₁₈-aryl, amine-containing C₁-C₂₄-alkyl, amine-containing C₂-C₂₄-alkenyl or hydrogen.

5. A mixture as claimed in any of claims 1 to 4, wherein the copolymer of component (a) is an α-olefin/maleimide copolymer, preferably of a C₁₂-C₄₀-α-olefin,
or wherein A in component (b) is an ethylene radical,
or wherein R in component (b) is a tallow fatty radical, wherein all of the above features are present.

6. The use of a mixture as claimed in any of claims 1 to 5 as an additive for mineral oil middle distillates.

7. The use as claimed in claim 6 as a paraffin dispersant for mineral oil middle distillates.

8. A mineral oil middle distillate containing a mixture as claimed in any of claims 1 to 5.

9. A mineral oil middle distillate as claimed in claim 8, furthermore containing a copolymer suitable as a middle distillate flow improver, in particular an ethylene/vinyl acetate copolymer or an ethylene/vinyl propionate copolymer.

10. A concentrate containing from 10 to 60% by weight, based on the total amount of the concentrate, of a mixture as claimed in any of claims 1 to 5, dissolved in a hydrocarbon solvent.

## Revendications

1. Mélange contenant
(a) 10 à 90% en poids d'au moins un imide constitué d'un produit de copolymérisation à base d'une α-oléfine et d'un acide dicarboxylique éthyléniquement insaturé et d'une polyamine, et
(b) 10 à 90% en poids d'au moins un produit de réaction d'un poly-(acide carboxylique en C₂₋₂₀) présentant au moins un groupe amino tertiaire avec des amines secondaires.

2. Mélange suivant la revendication 1, dans lequel la polyamine est une amine de la formule III : 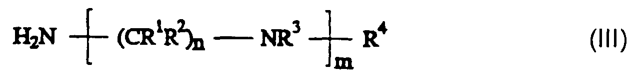 où
n a une valeur de 1 à 6,
m a une valeur de 1 à 3,
R¹ et R² représentent indépendamment l'un de l'autre de l'hydrogène, du méthyle, de l'éthyle,
R³ représente de l'hydrogène, un alcényle en C₂₋₂₄, un alkyle en C₁₋₂₄, un aryle en C₆₋₁₈, et
R⁴ représente de l'hydrogène, un alkyle en C₁₋₂₄, un alcényle en C₂₋₂₄, un aryle en C₆₋₁₈, un alcényle en C₂₋₂₄ contenant de l'amine ou un alkyle en C₁₋₂₄ contenant de l'amine,
et/ou dans lequel le poly-(acide carboxylique en C₂₋₂₀) présentant au moins un groupe amino tertiaire présente la formule V ou VI suivante : 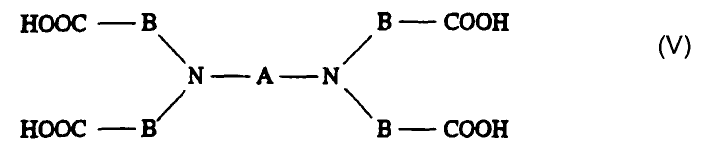 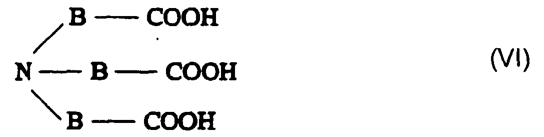 où A représente un radical alkylène en C₂₋₆ linéaire ou ramifié ou le radical de la formule VII : 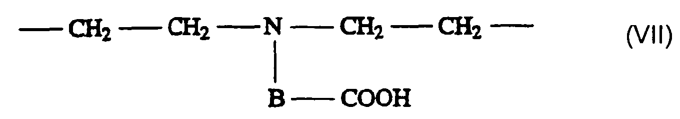 dans laquelle B représente un radical alkylène en C₁₋₁₉, de préférence un radical méthylène.

3. Mélange suivant l'une des revendications précédentes, dans lequel le produit de réaction (b) est un amide, un sel d'amide-ammonium ou un sel d'ammonium, dans lequel aucun, un ou plusieurs groupes acide carboxylique sont convertis en groupes amide,
et/ou dans lequel l'amine secondaire présente la formule générale HNR₂, où les radicaux R sont des radicaux alkyle en C₁₀₋₃₀ qui sont linéaires ou ramifiés.

4. Mélange suivant l'une des revendications 2 et 3, dans lequel la polyamine est une amine de la formule IV :
**R**^{**4**}**―NH―CH**_{**2**}**―CH**_{**2**}**―CH**_{**2**}**―NH**_{**2**} (IV)
dans laquelle R⁴ a la signification d'un alkyle en C₁₋₂₄, d'un alcényle en C₂₋₂₄, d'un aryle en C₆₋₁₈, d'un alkyle en C₁₋₂₄ contenant de l'amine, d'un alcényle en C₂₋₂₄ contenant de l'amine ou de l'hydrogène.

5. Mélange suivant l'une des revendications 1 à 4, dans lequel le produit de copolymérisation du composant (a) est un copolymère d'α-oléfine/imide d'acide maléique, de préférence à base d'une α-oléfine en C₁₂₋₄₀,
et/ou dans lequel A dans le composant (b) est un radical éthylène,
et/ou dans lequel le radical R dans le composant (b) est un radical de graisse de suif, en particulier dans lequel l'ensemble des particularités précédentes existe.

6. Utilisation d'un mélange suivant l'une des revendications 1 à 5, comme additif pour des distillats moyens de pétrole.

7. Utilisation suivant la revendication 6, comme dispersant paraffinique pour des distillats moyens de pétrole.

8. Distillat moyen de pétrole, contenant un mélange suivant l'une des revendications 1 à 5.

9. Distillat moyen de pétrole suivant la revendication 8, contenant en outre, comme agent améliorant l'écoulement du distillat moyen, des copolymères appropriés, en particulier des copolymères d'éthylène/acétate de vinyle et/ou des copolymères d'éthylène/propionate de vinyle.

10. Concentré, contenant 10 à 60% en poids, par rapport au poids global du concentré, en un mélange suivant l'une des revendications 1 à 5, en solution dans un solvant à base d'hydrocarbures.
